# EUROPEAN PATENT APPLICATION

(11) **EP 4 851 889 A1**
(43) Date of publication of application: **09.12.2026**
(21) Application number: 25770037.7
(22) Date of filing: 18.02.2025
(51) Int. Cl.: G06Q 10/0637, G06Q 50/04

(54) **SUPPORT SYSTEM AND SUPPORT METHOD**

(30) Priority: 14.03.2024 JP 2024039858
(71) Applicant: OMRON Corporation, Kyoto-shi, Kyoto 600-8530 (JP)
(72) Inventor: YAMAMOTO, Motoo, Kyoto-shi, Kyoto 600-8530 (JP); YAMAKAWA, Kenta, Kyoto-shi, Kyoto 600-8530 (JP); SASAKI, Jun, Kyoto-shi, Kyoto 600-8530 (JP); OKADA, Naoki, Kyoto-shi, Kyoto 600-8530 (JP)
(74) Representative: Isarpatent
(86) International application number: PCT/JP2025/005352
(87) International publication number: WO 2025/192189

(57) **Abstract**

An assistance system obtains a financial target and a non-financial target, generates, based on information indicating an operational status of production equipment operating at a production site and based on the financial target, a first plan to cause a value of a financial indicator at the production site to approach the financial target, and generates, based on information indicating the operational status of the production equipment resulting from implementation of the generated first plan and based on the non-financial target, a second plan to cause a value of a non-financial indicator at the production site to approach the non-financial target.

## Description

### FIELD

The present invention relates to a technique for assisting in reaching a target at a production site.

### BACKGROUND

Manufacturing sites continue their efforts to improve, for example, productivity and quality. Recent attempts focus on assisting in addressing challenges using information and communications technology (ICT) and digital transformation (DX) to analyze data collected from production sites. For example, Patent Literature 1 describes a technique for identifying potential bottlenecks and improving production capability in advance through computer simulations using a three-dimensional (3D) model of a production line.

### CITATION LIST

### PATENT LITERATURE

Patent Literature 1: Japanese Unexamined Patent Application Publication (Translation of PCT Application) No. 2020-521251

### SUMMARY

### TECHNICAL PROBLEM

In the manufacturing industry, the main issue has been, for example, to reach targets associated with production capability or output, such as productivity or production volume (referred to as financial targets). In addition to such financial targets, an increasing number of companies nowadays aim to reach targets associated with social values, such as environmental friendliness and improvement of working practices (referred to as non-financial targets). However, detailed solutions (plans) for reaching both financial targets and non-financial targets are not easy to develop, and methods for developing such solutions remain unestablished. Ideally, future systems for production sites are expected to change (improve) automatically and autonomously to reach assigned financial and non-financial targets.

Under such circumstances, one or more aspects of the present invention are directed to a technique for assisting in reaching a financial target and a non-financial target at a production site.

### SOLUTION TO PROBLEM

An assistance system according to an aspect of the present disclosure assists in reaching a target at a production site. The assistance system includes a financial target obtainer that obtains a financial target for a financial indicator to be reached at the production site, a non-financial target obtainer that obtains a non-financial target for a non-financial indicator to be reached at the production site, a first plan generator that generates, based on information indicating an operational status of production equipment operating at the production site and based on the financial target, a first plan to cause a value of the financial indicator at the production site to approach the financial target, and a second plan generator that generates, based on information indicating the operational status of the production equipment resulting from implementation of the first plan generated by the first plan generator and based on the non-financial target, a second plan to cause a value of the non-financial indicator at the production site to approach the non-financial target.

The assistance system may further include a financial indicator evaluator that obtains a value of a change in the financial indicator resulting from implementation of the first plan at the production site and determines, based on the value of the change in the financial indicator, whether the financial target is reached. The first plan generator may correct the first plan when the financial indicator evaluator determines that the financial target is unreached.

The assistance system may further include a non-financial indicator evaluator that obtains a value of a change in the non-financial indicator resulting from implementation of the second plan at the production site and determines, based on the value of the change in the non-financial indicator, whether the non-financial target is reached. The second plan generator may correct the second plan when the non-financial indicator evaluator determines that the non-financial target is unreached.

The assistance system may further include a non-financial indicator evaluator that obtains a value of a change in the non-financial indicator resulting from implementation of the second plan at the production site and determines, based on the value of the change in the non-financial indicator, whether the non-financial target is reached, and a third plan generator that generates a third plan different from the second plan when the non-financial indicator evaluator determines that the non-financial target is unreached. The third plan is a plan to cause the value of the non-financial indicator at the production site to approach the non-financial target.

The third plan generator may generate a plurality of candidate plans for the third plan and present the generated plurality of candidate plans to a user.

The assistance system may further include a learner that learns, through machine learning, information about a plan selected from the plurality of candidate plans by the user and the value of the change in the non-financial indicator resulting from implementation of the selected plan at the production site.

The first plan may include a control parameter to change control of the production equipment.

The first plan generator may include a trained model trained through machine learning to output a plan to cause the value of the financial indicator at the production site to approach the financial target based on information indicating the operational status of the production equipment and based on the financial target.

The second plan generator may include a trained model trained through machine learning to output a plan to cause the value of the non-financial indicator at the production site to approach the non-financial target based on information indicating the operational status of the production equipment and based on the non-financial target.

The assistance system may further include a simulator that performs an operation simulation using virtual production equipment simulating the production equipment in a virtual space. The simulator may perform the operation simulation by implementing the first plan generated by the first plan generator on the virtual production equipment and estimate the operational status of the production equipment resulting from implementation of the first plan. The second plan generator may generate the second plan using a result of estimation performed by the simulator as information indicating the operational status of the production equipment resulting from implementation of the first plan.

The assistance system may further include a simulator that performs an operation simulation using virtual production equipment simulating the production equipment in a virtual space. The simulator may perform the operation simulation by implementing the first plan generated by the first plan generator on the virtual production equipment and estimate the operational status of the production equipment resulting from implementation of the first plan. The financial indicator evaluator may estimate, based on a result of estimation performed by the simulator, the value of the change in the financial indicator resulting from implementation of the first plan on the production equipment.

The assistance system may further include a simulator that performs an operation simulation using virtual production equipment simulating the production equipment in a virtual space. The simulator may perform the operation simulation by implementing the second plan generated by the second plan generator on the virtual production equipment and estimate the operational status of the production equipment resulting from implementation of the second plan. The non-financial indicator evaluator may estimate, based on a result of estimation performed by the simulator, the value of the change in the non-financial indicator resulting from implementation of the second plan on the production equipment.

An assistance method according to an aspect of the present disclosure is implementable with a computer for assisting in reaching a target at a production site. The assistance method includes obtaining, with the computer, a financial target for a financial indicator to be reached at the production site, obtaining, with the computer, a non-financial target for a non-financial indicator to be reached at the production site, generating, with the computer, based on information indicating an operational status of production equipment operating at the production site and based on the financial target, a first plan to cause a value of the financial indicator at the production site to approach the financial target, and generating, with the computer, based on information indicating the operational status of the production equipment resulting from implementation of the first plan and based on the non-financial target, a second plan to cause a value of the non-financial indicator at the production site to approach the non-financial target.

A program according to an aspect of the present disclosure causes a computer to perform operations included in the above assistance method.

One or more aspects of the present invention are also directed to, for example, an assistance system, a target reaching assistance system, a plan provision system, a plan development system, an optimization system, an improvement system, or an autonomous management system including at least one of the above elements. One or more aspects of the present invention are also directed to an assistance method, a control method for an assistance system, a target reaching assistance method, a plan provision method, a plan development method, an optimization method, an improvement method, or an autonomous management method including at least one of the above processes. One or more aspects of the present invention are also directed to a program for implementing any of these methods, or directed to a storage medium storing the program. The above elements or processes may be combined with one another in any manner to form one or more aspects of the present invention.

### ADVANTAGEOUS EFFECTS

The technique according to the above aspects of the present invention can assist in reaching a financial target and a non-financial target at a production site.

### BRIEF DESCRIPTION OF THE DRAWINGS

[FIG. 1] FIG. 1 is a diagram of an assistance system according to one or more embodiments of the present invention, showing a conceptual model.
[FIG. 2] FIG. 2 is a functional block diagram of an assistance system according to a first embodiment.
[FIG. 3A] FIG. 3A is a diagram showing an example structure using a trained model.
[FIG. 3B] FIG. 3B is a diagram showing an example structure using a trained model.
[FIG. 3C] FIG. 3C is a diagram showing an example structure using a trained model.
[FIG. 4] FIG. 4 is a flowchart of an assistance process performed by the assistance system according to the first embodiment.
[FIG. 5] FIG. 5 is a diagram showing a case of optimization performed by the assistance system.
[FIG. 6] FIG. 6 is a diagram showing a case of optimization performed by the assistance system.
[FIG. 7] FIG. 7 is a functional block diagram of an assistance system according to a second embodiment.
[FIG. 8] FIG. 8 is a flowchart of an assistance process performed by the assistance system according to the second embodiment.
[FIG. 9] FIG. 9 is a flowchart of an assistance process performed by an assistance system according to a third embodiment.
[FIG. 10] FIG. 10 is a functional block diagram of an assistance system according to a fourth embodiment.

### DETAILED DESCRIPTION

### <Example Use>

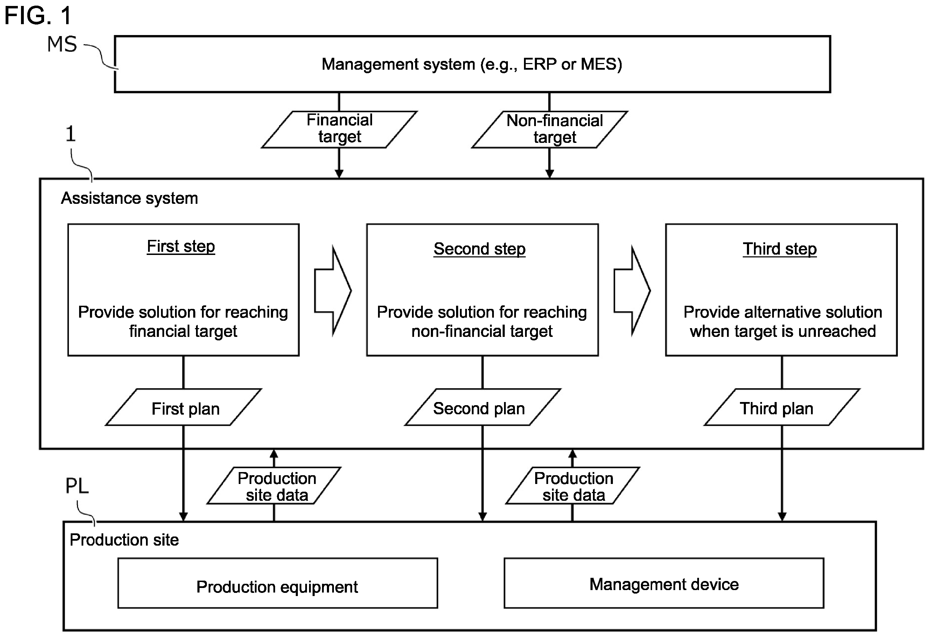

FIG. 1 is a diagram of an assistance system according to one or more embodiments of the present invention, showing a conceptual model. An overview of an assistance system 1 will be provided with reference to FIG. 1.

The assistance system 1 integrates with a management system MS of a company and various systems at a production site PL to allow data integration. The assistance system 1 generates and provides a solution (a plan for addressing a challenge) for improving the production site PL to reach a financial target and a non-financial target provided by the management system MS.

The financial target is a target value for a financial indicator that is set mainly by executives or managers. The financial indicator is an indicator associated with the capability or output of production or manufacturing, such as productivity, production volume, production value (sales), operating time, the operating rate, yield, the acceptance rate, first-pass yield, or the delivery date. The data of the financial target is obtained from, for example, a management system MS for production control, such as a manufacturing execution system (MES).

The non-financial target is a target value for a non-financial indicator that is set mainly by executives. The non-financial indicator is other than the financial indicator and is, for example, an indicator associated with a social value such as environmental friendliness, the achievement of Sustainable Development Goals (SDGs), or improvement of working practices. More specifically, the non-financial indicator may be an indicator of, for example, energy consumption, CO₂ emissions, job satisfaction, work engagement, or safety and health. The non-financial target is obtained from, for example, a management system MS for core business, such as enterprise resource planning (ERP).

When a financial target and a non-financial target are assigned, an optimal solution (plan) for reaching both these targets simultaneously is not easy to develop. The financial target and the non-financial target differ greatly in focus and details, and the issues to be addressed for both targets are more complex and less definable.

Thus, the assistance system 1 uses a sequential approach for improving the financial indicator first and then improving the non-financial indicator, rather than an approach for reaching both targets simultaneously. More specifically, the assistance system 1 generates and provides a solution (first plan) focused on reaching the financial target as a first step. The first plan is implemented at the production site PL to improve the financial indicator first. As a second step, a solution (second plan) focused on reaching the non-financial target is generated and implemented at the production site PL to improve the non-financial indicator. This procedure is based on the hypothesis that the improvement of the financial indicator creates extra capacity (spare time) in the operation of the production equipment and that the non-financial indicator can be improved by effectively using the extra capacity. In a typical example, increasing productivity and reducing the operating time of the production equipment (improving the financial indicator) creates an idle time in the production equipment (creates extra capacity). During the idle time, the production equipment can be stopped to reduce, for example, energy consumption or CO₂ emissions, thus improving the non-financial indicator. In this manner, an assigned primary issue (reaching the financial target and the non-financial target) is decomposed into two sub-issues, or specifically, improving the financial indicator and improving the non-financial indicator (using the extra capacity created by the improved financial indicator). This simplifies and facilitates the tasks and allows the assistance system 1 to automatically generate a solution.

The plan provided by the assistance system 1 may be, for example, information specifying the assignment of resources (e.g., persons, equipment, procedures, and materials) involved in manufacturing at the production site PL. An example of the plan is a recipe. In some embodiments, the first plan provided in the first step may be a control parameter to change the control of the production equipment operating at the production site PL. The second plan provided in the second step may also be a control parameter to change the control of the production equipment operating at the production site PL. Such plans (control parameters) provided by the assistance system 1 can be immediately implemented on the production equipment. This allows improved actions based on the plans to be implemented immediately and automatically. The effectiveness of the improved actions based on the plans can also be verified by monitoring production site data obtained from the production equipment. The above structure is expected to provide a mechanism by which the production equipment changes (improves) autonomously and automatically to reach the assigned financial and non-financial targets, or in other words, a mechanism of autonomous management. Each of the first plan and the second plan may be a plan other than a control parameter, such as an instruction for personnel assignment or operation (a plan involving human intervention) other than an instruction for controlling the production equipment.

Before (or instead of) implementing the generated first and second plans on the actual production equipment (actual equipment) that operates at the production site PL, the assistance system 1 may implement the plans on virtual production equipment that simulates the production equipment in a virtual space to perform operation simulations, and may estimate the operational status of the production equipment resulting from implementation of the plans. Using such a simulator, the assistance system 1 can generate plans and verify their effectiveness within the assistance system 1 alone. The assistance system 1 can thus perform the first step and the second step without affecting the operation of the actual equipment. Unlike the actual equipment, simulations facilitate trial and error with plans and allow comparison and refinement (tuning) of the plans. Although the effectiveness of some plans may take time to verify after the plans are implemented on the actual equipment, simulations can reduce such time. The simulator may be, for example, a digital twin that simulates production equipment (or the entire production site PL) using a 3D model. Advanced simulations using the digital twin are expected to allow accurate predictions of the values of changes in both the financial indicator and the non-financial indicator.

A target may not be successfully reached after the first step and the second step are performed. In one case, in the example described above, the financial indicator cannot improve any more when the operating time cannot be reduced further. In another case, the non-financial target cannot be reached using the created extra capacity alone. In such cases, the target cannot be reached easily simply by improving the control of the production equipment, and additional measures are to be implemented for factors or resources other than the control of the production equipment. Such measures include, for example, rearrangement or increase of lines, installation of new equipment (hardware or software), addition or reduction of operators, and re-examination of raw materials or energy. When a target is unreached after the first step and the second step are performed, the assistance system 1 generates and provides, as a third step, an alternative solution (third plan) different from the second plan. The alternative solution may include a plan unsuitable for automatic implementation at the production site PL, such as a plan involving human intervention, a plan involving decision-making (approval) by executives or managers, or a plan involving time and cost for implementation. Thus, in the third step, multiple candidate plans may be generated for an alternative solution (third plan) and presented to a user (e.g., an executive or a manager) to allow the user to select one of the candidate plans.

### <First Embodiment>

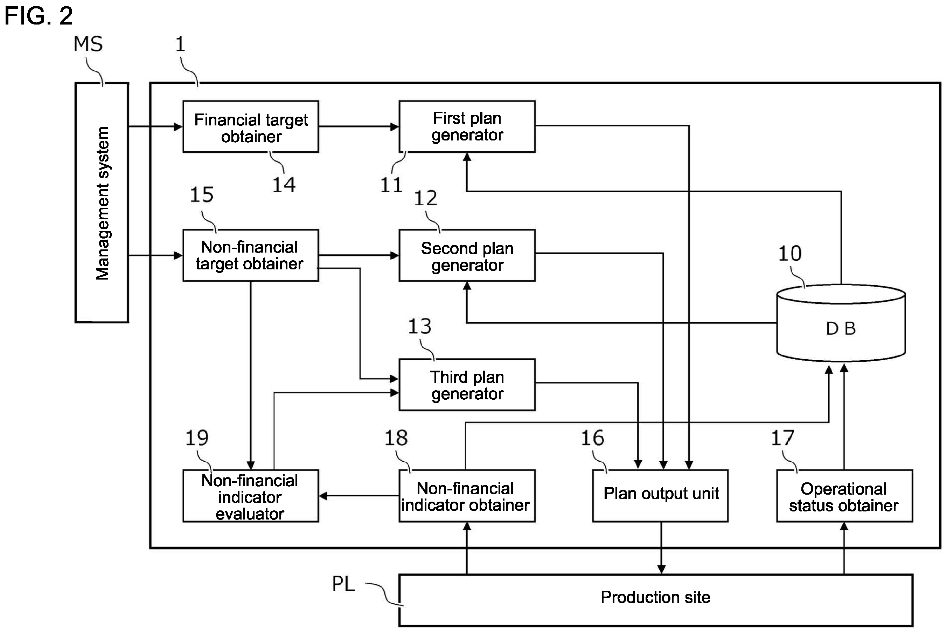

A first embodiment of the present invention will be described with reference to FIG. 2. FIG. 2 is a functional block diagram of an assistance system according to the first embodiment.

The assistance system 1 according to the first embodiment includes, as its main functional components, a database (DB) 10, a first plan generator 11, a second plan generator 12, a third plan generator 13, a financial target obtainer 14, a non-financial target obtainer 15, a plan output unit 16, an operational status obtainer 17, a non-financial indicator obtainer 18, and a non-financial indicator evaluator 19. The assistance system 1 is connected to the management system MS (e.g., an ERP or an MES) and the production site PL (e.g., production equipment or a management device) with a network to allow data integration. Examples of the production equipment include a manufacturing device, a transportation device, an inspection device, a programmable logic controller (PLC), a robot, and a sensor.

The financial target obtainer 14 is a functional component that obtains a financial target to be reached at the production site PL. The non-financial target obtainer 15 is a functional component that obtains a non-financial target to be reached at the production site PL. Although the financial target and the non-financial target are provided by the management system MS in the example in FIG. 2, the targets may be provided by separate systems, or may be input directly by a person into the assistance system 1.

The operational status obtainer 17 is a functional component that obtains information indicating the operational status (operational status data) from the production equipment operating at the production site PL. The operational status data is used to determine a plan to be generated and a change in a financial indicator. The type of operational status data to be obtained varies based on the type of financial or non-financial target that has been set. In other words, any type of information that can assist in reaching the financial or non-financial target may be collected as the operational status data. For example, the operational status data may be log data of the devices, programs executable in the devices and the associated parameters, or detection results of the sensors. The operational status data obtained by the operational status obtainer 17 is stored into the DB 10 together with information indicating the time at which the operational status data is obtained.

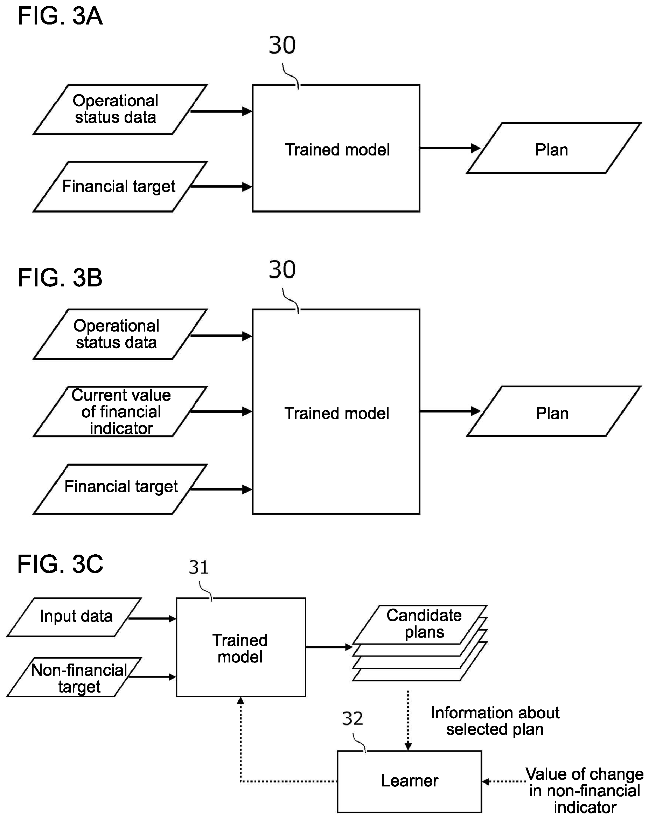

The first plan generator 11 is a functional component that performs the first step shown in FIG. 1. The first plan generator 11 generates a first plan based on the current operational status data (in other words, the operational status data before the first plan is implemented) and based on the financial target. The first plan is a solution focused on reaching the financial target, or in other words, a plan to cause the value of the financial indicator at the production site PL to approach the financial target. The first plan generator 11 uses a plan generation algorithm that may be designed in any manner. For example, a rule-based table or function may be used, or a trained model generated through machine learning may be used. FIGs. 3A and 3B each schematically show an example structure using a trained model. A trained model 30 in FIG. 3A is trained through machine learning to output a plan to cause the value of the financial indicator to approach the financial target in response to an input of the operational status data and the financial target. In this structure, the current value of the financial indicator is inferred from the operational status data in the trained model 30. A trained model 30 in FIG. 3B uses the current value of the financial indicator that is explicitly input into the trained model 30.

The second plan generator 12 is a functional component that performs the second step shown in FIG. 1. The second plan generator 12 generates a second plan based on the operational status data collected after implementation of the first plan at the production site PL and based on the non-financial target. The second plan is a solution focused on reaching the non-financial target, or in other words, a plan to cause the value of the non-financial indicator at the production site PL to approach the non-financial target. The second plan generator 12 uses a plan generation algorithm that may be designed in any manner. For example, a rule-based table or function may be used, or a trained model generated through machine learning may be used. For example, a structure similar to the structure in FIG. 3A or FIG. 3B may be used (with the term "financial" replaced by the term "non-financial").

The third plan generator 13 is a functional component that performs the third step shown in FIG. 1. The third plan generator 13 generates a third plan different from the second plan when the non-financial target is unreached after the second plan is implemented at the production site PL. The third plan is also a solution focused on reaching the non-financial target, or in other words, a plan to cause the value of the non-financial indicator at the production site PL to approach the non-financial target. The third plan generator 13 may present multiple candidate plans for the third plan to the user to allow the user to select one of the candidate plans. The third plan generator 13 uses a plan generation algorithm that may be designed in any manner. For example, a rule-based table or function may be used, or a trained model 31 generated through machine learning shown in FIG. 3C may be used. The trained model 31 is designed to output multiple candidate plans. The assistance system 1 may also include a learner 32 that is trained through machine learning based on information about a plan selected from the multiple candidate plans by the user and based on the effectiveness of the plan implemented at the production site PL (the value of a change in the non-financial indicator). The results of training of the learner 32 may be used to perform online training or fine tuning of the trained model 31 to improve the accuracy (validity and reliability) of candidate plans to be provided for the third plan. The same or a similar learner may be used to perform online training or fine tuning of the trained model 30 for the first plan or the second plan.

The plan output unit 16 is a functional component that outputs the plan generated by each of the generators 11 to 13 to the production site PL. The plan output unit 16 may vary the output manner (output method) as appropriate based on the type of plan. For a plan that is a control parameter to change the control of the production equipment, for example, the plan output unit 16 may update the control parameter for the production equipment at the production site PL. For a plan involving human intervention, the plan output unit 16 may display the details of the plan with, for example, a manager terminal at the production site PL.

The non-financial indicator obtainer 18 is a functional component that obtains information indicating a non-financial indicator from the production site PL. The obtained information is used to determine a change in the non-financial indicator. The type of non-financial indicator to be obtained varies based on the type of non-financial target that has been set. In other words, any type of information that can assist in reaching the non-financial target may be collected. For example, the information indicating the non-financial indicator may be log data of the devices, detection results of the sensors, records of energy consumption, results of a survey conducted among the operators, or monitoring results of biological information of the operators. The information indicating the non-financial indicator obtained by the non-financial indicator obtainer 18 is stored into the DB 10 together with information indicating the time at which the non-financial indicator is obtained.

The non-financial indicator evaluator 19 is a functional component that determines whether the non-financial target is reached based on the value of the change in the non-financial indicator before and after implementation of the second plan at the production site PL. The result of determination performed by the non-financial indicator evaluator 19 is used by, for example, the third plan generator 13.

The assistance system 1 may include a general-purpose computer including at least a central processing unit (CPU, or a processor), a memory, a storage, and a communication device. In this case, a computer program stored in the storage is loaded into the memory and executed by the CPU to implement the functional components 10 to 19 shown in FIG. 2. The functional components shown in FIG. 2 may be entirely or partially replaced with circuits such as application-specific integrated circuits (ASICs) or field-programmable gate arrays (FPGAs). The functional components shown in FIG. 2 may be entirely or partially implemented by another computer (or in cooperation with another computer) using cloud computing or distributed computing. In other words, the logical structure of the assistance system 1 shown in FIG. 2 may be implemented by a combination of hardware and software or by hardware alone. The system may include a single hardware device (computer) or a combination of multiple hardware devices (computers).

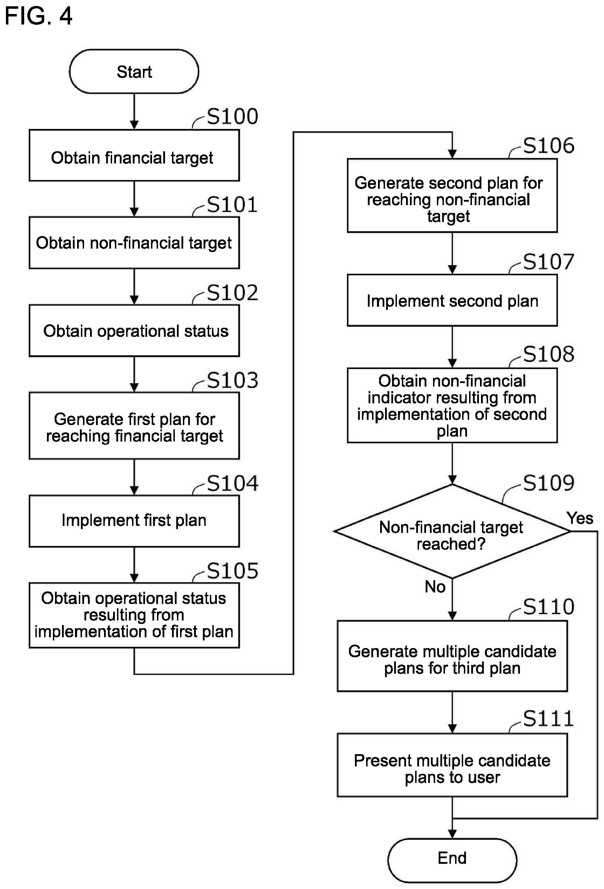

An example assistance method implementable by the assistance system 1 will be described with reference to FIG. 4. FIG. 4 is a flowchart of an assistance process performed by the assistance system according to the first embodiment.

First, the financial target obtainer 14 obtains a financial target from a management system MS (step S100). The non-financial target obtainer 15 obtains a non-financial target from a management system MS (step S101). The obtained financial target and the obtained non-financial target are stored into the storage (storage device).

The operational status obtainer 17 obtains the current operational status data from the production equipment at the production site PL, and stores the data into the DB 10 (step S102). The processing in step S102 continues until data to be used for generating the first plan in the subsequent step is stored.

The first plan generator 11 generates the first plan to cause the value of the financial indicator to approach the financial target based on the financial target obtained in step S100 and based on the operational status data obtained in step S102 (step S103). The plan output unit 16 then changes the control parameter for the production equipment at the production site PL based on the first plan generated in step S103 (step S104).

The implementation of the first plan causes a change in the operational status of the production equipment (e.g., the operating time, the throughput, or the production volume). The operational status obtainer 17 obtains the changed operational status data (step S105). The processing in step S105 continues until data to be used for generating the second plan in the subsequent step is stored.

The second plan generator 12 generates the second plan to cause the value of the non-financial indicator to approach the non-financial target based on the non-financial target obtained in step S101 and based on the operational status data obtained in step S105 (step S106). The plan output unit 16 then changes the control parameter for the production equipment at the production site PL based on the second plan generated in step S106 (step S107). The changed control of the production equipment resulting from implementation of the second plan improves the non-financial indicator.

The non-financial indicator obtainer 18 then obtains information indicating the non-financial indicator from the production site PL, and stores the information into the DB 10 (step S108). The time interval between the implementation of the second plan (step S107) and the obtainment of the non-financial indicator (S108) may be designed based on the type of second plan or the type of non-financial indicator. For example, the non-financial indicator may be energy consumption, and the second plan may be to optimize the control for stopping the production equipment. In this case, the change in energy consumption is expected to be measurable several hours after the second plan is implemented. The time interval may thus be set to, for example, about several hours to several days. When the non-financial indicator is job satisfaction or work engagement, the non-financial indicator is expected to reflect the effectiveness several days to several weeks after the implementation of the second plan. Such a non-financial indicator is obtained through a survey conducted among the operators, which is time-consuming. In this case, the time interval may be set to about several weeks to several months.

After the non-financial indicator is obtained, the non-financial indicator evaluator 19 calculates the value of the change in the non-financial indicator before and after implementation of the second plan, and determines whether the non-financial target obtained in step S101 is reached (step S109). When the non-financial target is reached (Yes in step S109), the assistance process ends. In the present embodiment, the financial target is determined to be reached upon implementation of the first plan, without verification of whether the financial target has actually been reached.

When the non-financial target is unreached after the second plan is implemented (No in step S109), the third plan generator 13 generates the third plan different from the second plan (step S110). More specifically, the third plan generator 13 generates multiple candidate plans (step S110), and presents the candidate plans to the user to allow the user to select one of the candidate plans (step S111).

In the assistance process described above, the first plan and the second plan are generated for reaching the assigned financial and non-financial targets, and the plans are implemented on the production equipment at the production site PL. This allows automatic and autonomous optimization of the production site PL with substantially no user effort or judgment.

### (Case 1)

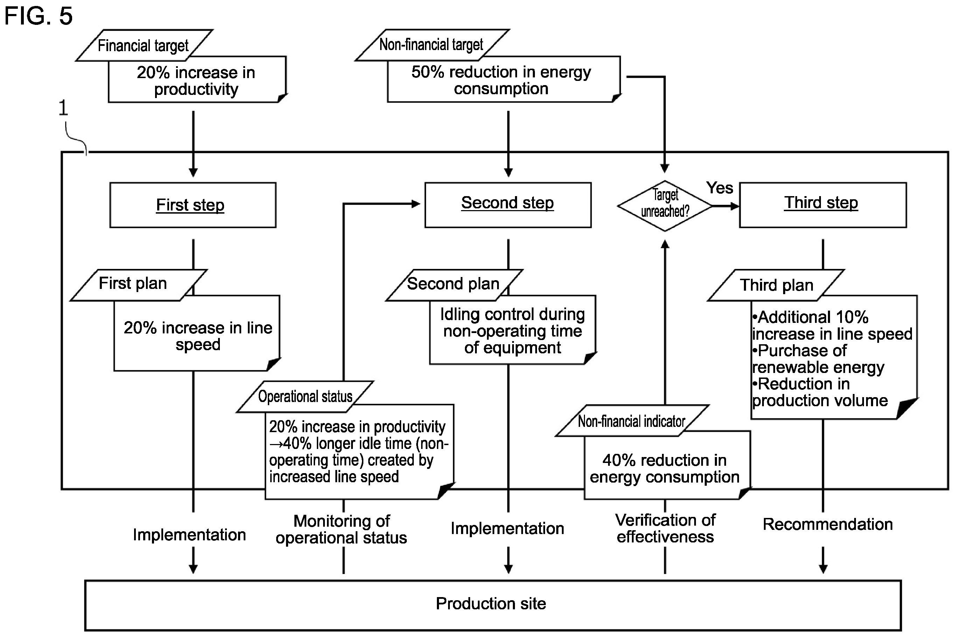

FIG. 5 shows case 1 of optimization performed by the assistance system 1. In case 1, the financial target is to increase productivity by 20%, and the non-financial target is to reduce energy consumption by 50%.

In the first step, the first plan specifying a 20% increase in line speed is determined as a plan for increasing productivity by 20%. The control parameter for the production equipment is changed based on this plan. The implementation of the first plan increases productivity by 20%, and the increased productivity creates 40% extra capacity in the production equipment. In other words, the increased line speed allows for a non-operating time of the production equipment that is 40% longer than before the first plan is implemented.

In the second step, the second plan is determined. The second plan is to reduce energy consumption as the non-financial target using the extra capacity created in the first step. In this case, the control parameter is changed to switch the production equipment to an idling state (with low energy consumption) during the extra time (in other words, during the non-operating time of the production equipment). This reduces energy consumption by 40%.

The financial target of increasing productivity by 20% is reached through the first step and the second step, whereas the non-financial target of reducing energy consumption by 50% is unreached (an additional 10% reduction is to be reached). The assistance system 1 thus additionally performs the third step. In the third step, the third plan for reducing energy consumption by 10% is generated and presented to the user (an executive or a manager). In this case, three candidate plans, or specifically, an additional 10% increase in line speed, a purchase of renewable energy, and a reduction in production volume, are recommended to the user.

### (Case 2)

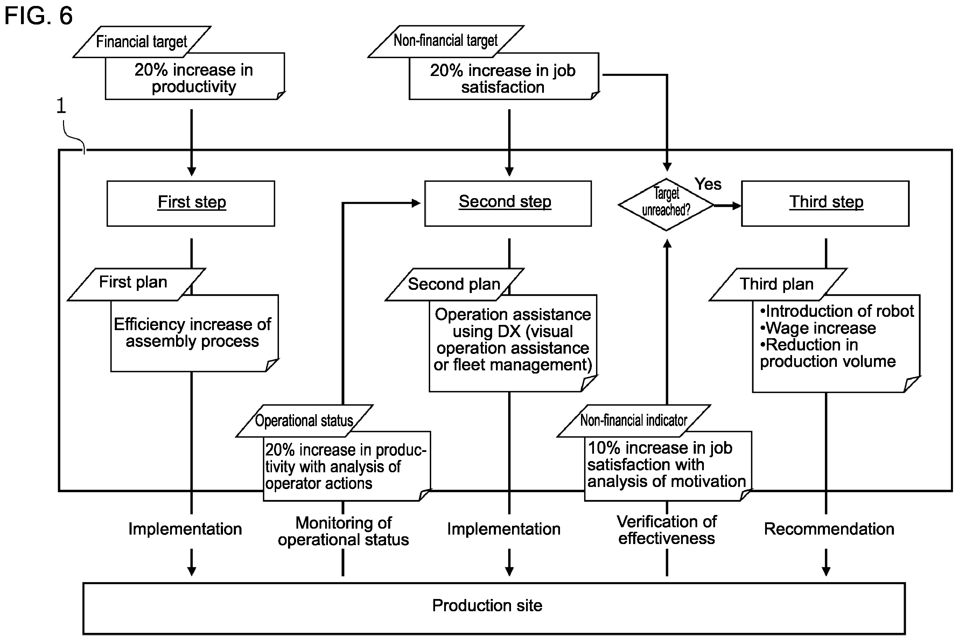

FIG. 6 shows case 2 of optimization performed by the assistance system 1. In case 2, the financial target is to increase productivity by 20%, and the non-financial target is to increase job satisfaction by 20%.

In the first step, the first plan specifying an efficiency increase of the assembly process is determined as a plan for increasing productivity by 20%. The control parameter for the production equipment is changed based on this plan (e.g., the workpiece transport speed is increased, or the robot motion speed is increased). Analyzing the operational status data resulting from implementation of the first plan reveals that productivity has increased by 20%, and also reveals the effects of the increased efficiency of the assembly process on the operator actions (e.g., the operation procedure, the movement line, or the wait time).

In the second step, the second plan is determined. The second plan is to increase job satisfaction as the non-financial target using the analysis of the operator actions based on the operational status data resulting from implementation of the first plan. In this case, DX is used to provide operation assistance (e.g., visual operation assistance using augmented reality, or AR, and fleet management that optimizes the path and the layout of autonomous mobile robots). This increases job satisfaction by 10%. Job satisfaction may be evaluated by analyzing motivation using, for example, a survey conducted among the operators or the analysis of operator actions.

The financial target of increasing productivity by 20% is reached through the first step and the second step, whereas the non-financial target of increasing job satisfaction by 20% is unreached (an additional 10% increase is to be reached). The assistance system 1 thus additionally performs the third step. In the third step, the third plan for further increasing job satisfaction by 10% is generated and presented to the user (an executive or a manager). In this case, three candidate plans, or specifically, an introduction of a robot, a wage increase, and a reduction in production volume, are recommended to the user.

### <Second Embodiment>

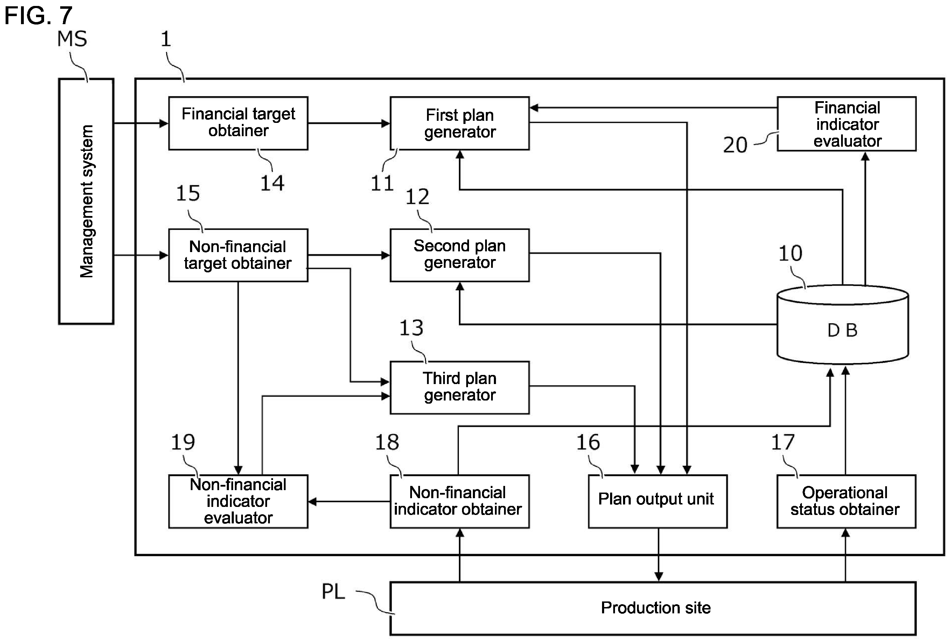

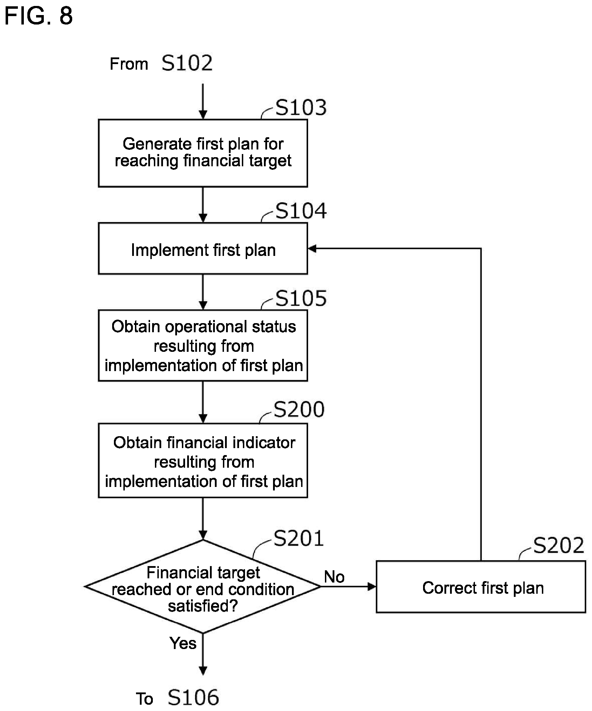

A second embodiment of the present invention will be described with reference to FIGs. 7 and 8. In the first embodiment, the financial target is determined to be reached upon implementation of the first plan, without verification of whether the financial target has actually been reached. In the second embodiment, the financial indicator is evaluated after implementation of the first plan, and the first plan is corrected when the financial target is unreached. The present embodiment will be described focusing on its differences from the first embodiment.

FIG. 7 is a functional block diagram of an assistance system according to the second embodiment. An assistance system 1 according to the present embodiment includes a financial indicator evaluator 20. The financial indicator evaluator 20 is a functional component that obtains, based on the operational status data, the value of the change in the financial indicator before and after implementation of the first plan at the production site PL, and determines whether the financial target is reached based on the obtained value of the change.

FIG. 8 is a flowchart of an assistance process in the second embodiment. FIG. 8 shows the processing in the first step, which corresponds to the processing in steps S103 to S105 in the flowchart in the first embodiment (FIG. 4).

After the processing up to step S102 is performed as in the first embodiment, the first plan generator 11 generates the first plan to cause the value of the financial indicator to approach the financial target based on the financial target obtained in step S100 and based on the operational status data obtained in step S102 (step S103). The plan output unit 16 then changes the control parameter for the production equipment at the production site PL based on the first plan generated in step S103 (step S104).

The implementation of the first plan causes a change in the operational status of the production equipment (e.g., the operating time, the throughput, or the production volume). The operational status obtainer 17 obtains the changed operational status data (step S105). The processing in step S105 continues until data to be used for generating the second plan in the subsequent step is stored.

The financial indicator evaluator 20 then calculates the value of the financial indicator resulting from implementation of the first plan based on the operational status data stored in the DB 10 (step S200). The financial indicator evaluator 20 then determines whether the financial target is reached based on the value of the change in the financial indicator resulting from implementation of the first plan (step S201). When the financial indicator evaluator 20 determines that the financial target is unreached (No in step S201), the first plan generator 11 corrects the first plan (step S202). In case 1 described above, the first plan specifying a 20% increase in line speed is implemented. When a 20% increase in productivity is unreached after the first plan is implemented, the first plan may be simply corrected to specify, for example, a 30% increase in line speed. The processing in steps S104, S105, S200, and S201 is performed again using the corrected first plan.

When the financial target is reached through repeated correction and implementation of the first plan or when a predetermined end condition is satisfied (Yes in step S201), the processing exits the loop and advances to step S106. The predetermined end condition is, for example, that the repeat count reaches the upper limit, or that the value of the change in the financial indicator is less than or equal to a threshold after the first plan is corrected. The subsequent processing may be the same as in the first embodiment. In the second embodiment described above, the control of the production site can be refined to reach the financial target.

### <Third Embodiment>

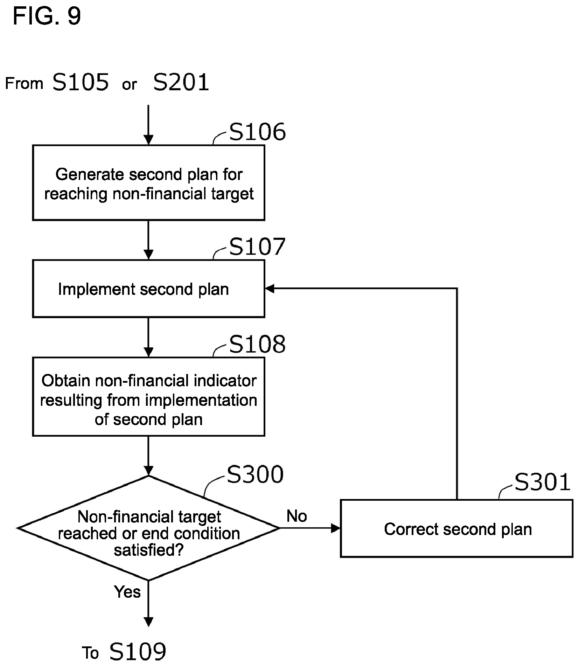

A third embodiment of the present invention will be described with reference to FIG. 9. In the first and second embodiments, the second plan is generated and implemented once. In the third embodiment, the non-financial indicator is evaluated after the second plan is implemented, and the second plan is corrected when the non-financial target is unreached. The present embodiment will be described focusing on its differences from the first and second embodiments.

FIG. 9 is a flowchart of an assistance process in the third embodiment. FIG. 9 shows the processing in the second step, which corresponds to the processing in steps S106 to S108 in the flowchart in the first embodiment (FIG. 4).

After the first plan is implemented, the second plan generator 12 generates the second plan to cause the value of the non-financial indicator to approach the non-financial target based on the non-financial target obtained in step S101 and based on the operational status data obtained in step S105 (step S106), as in the first or second embodiment. The plan output unit 16 then changes the control parameter for the production equipment at the production site PL based on the second plan generated in step S106 (step S107). The changed control of the production equipment resulting from implementation of the second plan improves the non-financial indicator. The non-financial indicator obtainer 18 then obtains information indicating the non-financial indicator from the production site PL (step S108).

The non-financial indicator evaluator 19 then determines whether the non-financial target is reached based on the value of the change in the non-financial indicator resulting from implementation of the second plan (step S300). When the non-financial indicator evaluator 19 determines that the non-financial target is unreached (No in step S300), the second plan generator 12 corrects the second plan (step S301). In case 1 described above, the second plan specifying idling control is implemented. When a 50% reduction in energy consumption is unreached after the second plan is implemented, the second plan may be corrected to optimize, for example, operating time and idle time. The processing in steps S107, S108, and S300 is performed again using the corrected second plan.

When the non-financial target is reached through repeated correction and implementation of the second plan or when a predetermined end condition is satisfied (Yes in step S300), the processing exits the loop and advances to step S109. The predetermined end condition is, for example, that the repeat count reaches the upper limit, or that the value of the change in the non-financial indicator is less than or equal to a threshold after the second plan is corrected. The subsequent processing may be the same as in the first embodiment. In the third embodiment described above, the control of the production site can be refined to reach the non-financial target.

### <Fourth Embodiment>

Before (or instead of) implementing the generated first and second plans on the actual production equipment (actual equipment) that operates at the production site PL, the assistance system 1 may implement the plans on virtual production equipment that simulates the production equipment in a virtual space to perform operation simulations, and may estimate the operational status of the production equipment resulting from implementation of the plans. Using such a simulator, the assistance system 1 can generate plans and verify their effectiveness within the assistance system 1 alone. The assistance system 1 can thus perform the first step and the second step without affecting the operation of the actual equipment. Unlike the actual equipment, simulations facilitate trial and error with plans and allow comparison and refinement (tuning) of the plans. Although the effectiveness of some plans may take time to verify after the plans are implemented on the actual equipment, simulations can reduce such time. The simulator may be, for example, a digital twin that simulates production equipment (or the entire production site PL) using a 3D model. Advanced simulations using the digital twin are expected to allow accurate predictions of the values of changes in both the financial indicator and the non-financial indicator.

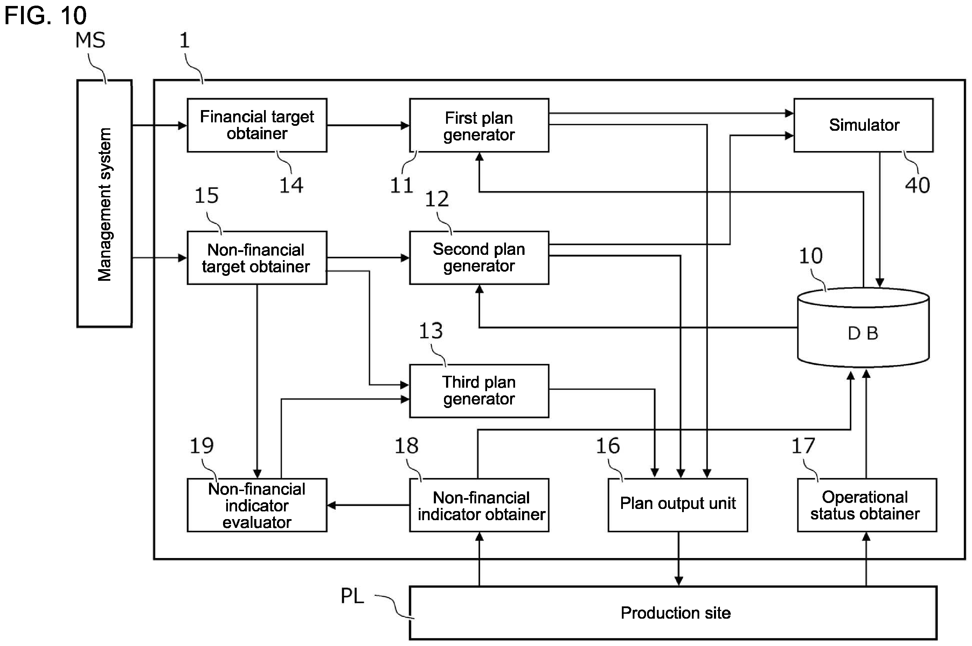

FIG. 10 is a functional block diagram of an assistance system according to a fourth embodiment. An assistance system 1 according to the present embodiment includes a simulator 40 that performs an operation simulation using virtual production equipment simulating the production equipment at the production site PL in a virtual space.

For example, the simulator 40 may perform the operation simulation by implementing the first plan on the virtual production equipment in step S104 in FIG. 4, and may estimate the operational status of the production equipment resulting from implementation of the first plan. The simulator 40 may store the estimation result into the DB 10. The simulator 40 may use the estimation result as the operational status data resulting from implementation of the first plan in steps S105 and S106. The simulator 40 may use the estimation result to estimate the value of the change in the financial indicator resulting from implementation of the first plan in step S200 in FIG. 8. Similarly, for example, the simulator 40 may perform the operation simulation by implementing the second plan on the virtual production equipment in step S107 in FIG. 4, and may estimate the operational status of the production equipment resulting from implementation of the second plan. The simulator 40 may store the estimation result into the DB 10. The simulator 40 may use the estimation result to estimate the value of the change in the non-financial indicator resulting from implementation of the second plan in step S108.

### <Others>

The above embodiments describe exemplary structures according to one or more aspects of the present invention. The present invention is not limited to the specific embodiments described above, but may be modified variously within the scope of the technical idea of the invention. The structures according to the first to fourth embodiments may be combined with one another unless any technical contradiction arises. For example, the simulator 40 in the fourth embodiment may be combined with any of the first to third embodiments. In this case, the simulator 40 may also function as the financial indicator evaluator 20, the non-financial indicator obtainer 18, or the non-financial indicator evaluator 19.

One or more aspects of the present disclosure are directed to the structure, the method, and the program below.

### [Aspect 1]

An assistance system (1) for assisting in reaching a target at a production site (PL), the assistance system (1) comprising:
a financial target obtainer (14) configured to obtain a financial target for a financial indicator to be reached at the production site (PL);
a non-financial target obtainer (15) configured to obtain a non-financial target for a non-financial indicator to be reached at the production site (PL);
a first plan generator (11) configured to generate, based on information indicating an operational status of production equipment operating at the production site (PL) and based on the financial target, a first plan to cause a value of the financial indicator at the production site (PL) to approach the financial target; and
a second plan generator (12) configured to generate, based on information indicating the operational status of the production equipment resulting from implementation of the first plan generated by the first plan generator (11) and based on the non-financial target, a second plan to cause a value of the non-financial indicator at the production site (PL) to approach the non-financial target.

### [Aspect 2]

The assistance system (1) according to aspect 1, further comprising:
a financial indicator evaluator (20) configured to obtain a value of a change in the financial indicator resulting from implementation of the first plan at the production site (PL) and determine, based on the value of the change in the financial indicator, whether the financial target is reached,
wherein the first plan generator (11) corrects the first plan when the financial indicator evaluator (20) determines that the financial target is unreached.

### [Aspect 3]

The assistance system (1) according to aspect 1 or aspect 2, further comprising:
a non-financial indicator evaluator (19) configured to obtain a value of a change in the non-financial indicator resulting from implementation of the second plan at the production site (PL) and determine, based on the value of the change in the non-financial indicator, whether the non-financial target is reached,
wherein the second plan generator (12) corrects the second plan when the non-financial indicator evaluator (19) determines that the non-financial target is unreached.

### [Aspect 4]

The assistance system (1) according to any one of aspects 1 to 3, further comprising:
a non-financial indicator evaluator (19) configured to obtain a value of a change in the non-financial indicator resulting from implementation of the second plan at the production site (PL) and determine, based on the value of the change in the non-financial indicator, whether the non-financial target is reached; and
a third plan generator (13) configured to generate a third plan different from the second plan when the non-financial indicator evaluator (19) determines that the non-financial target is unreached, the third plan being a plan to cause the value of the non-financial indicator at the production site (PL) to approach the non-financial target.

### [Aspect 5]

The assistance system (1) according to aspect 4, wherein
the third plan generator (13) generates a plurality of candidate plans for the third plan and presents the generated plurality of candidate plans to a user.

### [Aspect 6]

The assistance system (1) according to aspect 5, further comprising:
a learner (32) configured to learn, through machine learning, information about a plan selected from the plurality of candidate plans by the user and the value of the change in the non-financial indicator resulting from implementation of the selected plan at the production site.

### [Aspect 7]

The assistance system (1) according to any one of aspects 1 to 6, wherein
the first plan includes a control parameter to change control of the production equipment.

### [Aspect 8]

The assistance system (1) according to any one of aspects 1 to 7, wherein
the first plan generator (11) includes a trained model (30) trained through machine learning to output a plan to cause the value of the financial indicator at the production site (PL) to approach the financial target based on information indicating the operational status of the production equipment and based on the financial target.

### [Aspect 9]

The assistance system (1) according to any one of aspects 1 to 8, wherein
the second plan generator (12) includes a trained model (30) trained through machine learning to output a plan to cause the value of the non-financial indicator at the production site (PL) to approach the non-financial target based on information indicating the operational status of the production equipment and based on the non-financial target.

### [Aspect 10]

The assistance system (1) according to any one of aspects 1 to 9, further comprising:
a simulator (40) configured to perform an operation simulation using virtual production equipment simulating the production equipment in a virtual space,
wherein the simulator (40) performs the operation simulation by implementing the first plan generated by the first plan generator (11) on the virtual production equipment and estimates the operational status of the production equipment resulting from implementation of the first plan, and
the second plan generator (12) generates the second plan using a result of estimation performed by the simulator (40) as information indicating the operational status of the production equipment resulting from implementation of the first plan.

### [Aspect 11]

The assistance system (1) according to aspect 2, further comprising:
a simulator (40) configured to perform an operation simulation using virtual production equipment simulating the production equipment in a virtual space,
wherein the simulator (40) performs the operation simulation by implementing the first plan generated by the first plan generator (11) on the virtual production equipment and estimates the operational status of the production equipment resulting from implementation of the first plan, and
the financial indicator evaluator (20) estimates, based on a result of estimation performed by the simulator (40), the value of the change in the financial indicator resulting from implementation of the first plan on the production equipment.

### [Aspect 12]

The assistance system (1) according to aspect 3 or aspect 4, further comprising:
a simulator (40) configured to perform an operation simulation using virtual production equipment simulating the production equipment in a virtual space,
wherein the simulator (40) performs the operation simulation by implementing the second plan generated by the second plan generator (12) on the virtual production equipment and estimates the operational status of the production equipment resulting from implementation of the second plan, and
the non-financial indicator evaluator (19) estimates, based on a result of estimation performed by the simulator (40), the value of the change in the non-financial indicator resulting from implementation of the second plan on the production equipment.

### [Aspect 13]

An assistance method implementable with a computer for assisting in reaching a target at a production site (PL), the assistance method comprising:
obtaining, with the computer, a financial target for a financial indicator to be reached at the production site (PL);
obtaining, with the computer, a non-financial target for a non-financial indicator to be reached at the production site (PL);
generating, with the computer, based on information indicating an operational status of production equipment operating at the production site (PL) and based on the financial target, a first plan to cause a value of the financial indicator at the production site (PL) to approach the financial target; and
generating, with the computer, based on information indicating the operational status of the production equipment resulting from implementation of the first plan and based on the non-financial target, a second plan to cause a value of the non-financial indicator at the production site (PL) to approach the non-financial target.

### [Aspect 14]

A program for causing a computer to perform operations included in the method according to aspect 13.

### REFERENCE SIGNS LIST

- 1: assistance system
- MS: management system
- PL: production site

## Claims

1. An assistance system for assisting in reaching a target at a production site, the assistance system comprising:
a financial target obtainer configured to obtain a financial target for a financial indicator to be reached at the production site;
a non-financial target obtainer configured to obtain a non-financial target for a non-financial indicator to be reached at the production site;
a first plan generator configured to generate, based on information indicating an operational status of production equipment operating at the production site and based on the financial target, a first plan to cause a value of the financial indicator at the production site to approach the financial target; and
a second plan generator configured to generate, based on information indicating the operational status of the production equipment resulting from implementation of the first plan generated by the first plan generator and based on the non-financial target, a second plan to cause a value of the non-financial indicator at the production site to approach the non-financial target.

2. The assistance system according to claim 1, further comprising:
a financial indicator evaluator configured to obtain a value of a change in the financial indicator resulting from implementation of the first plan at the production site and determine, based on the value of the change in the financial indicator, whether the financial target is reached,
wherein the first plan generator corrects the first plan when the financial indicator evaluator determines that the financial target is unreached.

3. The assistance system according to claim 1 or claim 2, further comprising:
a non-financial indicator evaluator configured to obtain a value of a change in the non-financial indicator resulting from implementation of the second plan at the production site and determine, based on the value of the change in the non-financial indicator, whether the non-financial target is reached,
wherein the second plan generator corrects the second plan when the non-financial indicator evaluator determines that the non-financial target is unreached.

4. The assistance system according to any one of claims 1 to 3, further comprising:
a non-financial indicator evaluator configured to obtain a value of a change in the non-financial indicator resulting from implementation of the second plan at the production site and determine, based on the value of the change in the non-financial indicator, whether the non-financial target is reached; and
a third plan generator configured to generate a third plan different from the second plan when the non-financial indicator evaluator determines that the non-financial target is unreached, the third plan being a plan to cause the value of the non-financial indicator at the production site to approach the non-financial target.

5. The assistance system according to claim 4, wherein
the third plan generator generates a plurality of candidate plans for the third plan and presents the generated plurality of candidate plans to a user.

6. The assistance system according to claim 5, further comprising:
a learner configured to learn, through machine learning, information about a plan selected from the plurality of candidate plans by the user and the value of the change in the non-financial indicator resulting from implementation of the selected plan at the production site.

7. The assistance system according to any one of claims 1 to 6, wherein
the first plan includes a control parameter to change control of the production equipment.

8. The assistance system according to any one of claims 1 to 7, wherein
the first plan generator includes a trained model trained through machine learning to output a plan to cause the value of the financial indicator at the production site to approach the financial target based on information indicating the operational status of the production equipment and based on the financial target.

9. The assistance system according to any one of claims 1 to 8, wherein
the second plan generator includes a trained model trained through machine learning to output a plan to cause the value of the non-financial indicator at the production site to approach the non-financial target based on information indicating the operational status of the production equipment and based on the non-financial target.

10. The assistance system according to any one of claims 1 to 9, further comprising:
a simulator configured to perform an operation simulation using virtual production equipment simulating the production equipment in a virtual space,
wherein the simulator performs the operation simulation by implementing the first plan generated by the first plan generator on the virtual production equipment and estimates the operational status of the production equipment resulting from implementation of the first plan, and
the second plan generator generates the second plan using a result of estimation performed by the simulator as information indicating the operational status of the production equipment resulting from implementation of the first plan.

11. The assistance system according to claim 2, further comprising:
a simulator configured to perform an operation simulation using virtual production equipment simulating the production equipment in a virtual space,
wherein the simulator performs the operation simulation by implementing the first plan generated by the first plan generator on the virtual production equipment and estimates the operational status of the production equipment resulting from implementation of the first plan, and
the financial indicator evaluator estimates, based on a result of estimation performed by the simulator, the value of the change in the financial indicator resulting from implementation of the first plan on the production equipment.

12. The assistance system according to claim 3 or claim 4, further comprising:
a simulator configured to perform an operation simulation using virtual production equipment simulating the production equipment in a virtual space,
wherein the simulator performs the operation simulation by implementing the second plan generated by the second plan generator on the virtual production equipment and estimates the operational status of the production equipment resulting from implementation of the second plan, and
the non-financial indicator evaluator estimates, based on a result of estimation performed by the simulator, the value of the change in the non-financial indicator resulting from implementation of the second plan on the production equipment.

13. An assistance method implementable with a computer for assisting in reaching a target at a production site, the assistance method comprising:
obtaining, with the computer, a financial target for a financial indicator to be reached at the production site;
obtaining, with the computer, a non-financial target for a non-financial indicator to be reached at the production site;
generating, with the computer, based on information indicating an operational status of production equipment operating at the production site and based on the financial target, a first plan to cause a value of the financial indicator at the production site to approach the financial target; and
generating, with the computer, based on information indicating the operational status of the production equipment resulting from implementation of the first plan and based on the non-financial target, a second plan to cause a value of the non-financial indicator at the production site to approach the non-financial target.

14. A program for causing a computer to perform operations included in the method according to claim 13.
